# FASCICULE DE BREVET EUROPEEN

(11) **EP 1 133 238 B1**
(45) Date de publication et mention de la délivrance du brevet: **28.07.2004**
(21) Numéro de dépôt: 99958115.0
(22) Date de dépôt: 17.11.1999
(51) Int. Cl.: A23C 9/142, A23C 11/04

(54) **PROCEDE DE PREPARATION D'UNE COMPOSITION PROTEIQUE ET D'UNE FORMULE INFANTILE LA CONTENANT**
VERFAHREN ZUR HERSTELLUNG EINER PROTEINZUSAMMENZETZUNG UND EINER DIESE ENTHALTENDEN SÄUGLINGSNAHRUNG
METHOD FOR PREPARING A PROTEIN COMPOSITION AND AN INFANT FORMULA CONTAINING SAME

(30) Priorité: 24.11.1998 EP 98203960
(43) Date de publication de la demande: 19.09.2001
(73) Titulaire: SOCIETE DES PRODUITS NESTLE S.A., 1800 Vevey (CH)
(72) Inventeur: JOST, Rolf, CH-3065 Bolligen (CH); BERROCAL, Rafael, CH-1806 St-Légier (CH); KRATKY, Zdenek, CH-1613 Maracon (CH)
(74) Mandataire: Archambault, Jean
(86) Numéro de dépôt international: PCT/EP1999/009050
(87) Numéro de publication internationale: WO 2000/030461

(56) Documents cités:
- WO-A-94/13148
- WO-A-95/17102
- WO-A-96/08155
- WO-A-97/49295
- US-A- 4 497 836
- US-A- 5 503 865
- MILANOVIC S ET AL: "PRODUCTION AND QUALITY OF DEMINERALIZED PERMEATE, CONCENTRATED PERMEATE AND PERMEATE POWDER" MILCHWISSENSCHAFT, vol. 45, no. 5, 1 janvier 1990 (1990-01-01), pages 303-308, XP000135608

## Description

L'invention se rapporte au domaine de la préparation d'une formule infantile à prédominance à base d'une matière première lactique issue de lactosérum.

Dans les formules infantiles adaptées aux besoins du nourrisson et du petit enfant, on désire dans la mesure du possible avoir un profil d'acides aminés aussi proche que possible de celui du lait maternel. Bien que celà ne soit pas difficile pour la plupart des acides aminés essentiels lorsque l'on utilise des matières premières ayant pour origine le lait animal, en particulier le lait de vache, comme par exemple le lactosérum, la caséine ou le lait écrémé, dans les formules certains acides aminés ne sont pas en équilibre par rapport à ce que l'on trouve dans le lait humain, notamment la thréonine et le tryptophane.

La thréonine pose un problème particulier en ce que sa teneur est trop élevée dans les formules à prédominance de lactosérum, ce qui est susceptible d'induire une hyperthréoninémie dans le plasma des nourrissons et petits enfants nourris avec ces formules. La caséine a une teneur en thréonine plus faible, mais une formule à prédominance de caséine induit une déficience en tryptophane. La teneur en tryptophane augmente parallèlement à la proportion de protéines de lactosérum dans la formule mais, lorsque l'on utilise le lactosérum doux (non acide, obtenu par action de la présure), qui est la source principale, on dépasse la teneur optimale en thréonine (de l'ordre de 4,5-5,5 g/100 g de protéines).

Les concentrats de lactosérum acide ont une teneur en thréonine bien plus faible et une teneur en tryptophane plus élevée que ceux de lactosérum doux. Pour cette raison, on a proposé, par exemple dans WO 95/17102 d'utiliser un lactosérum acide exempt de caséino-macropeptide ou à teneur réduite en caséino-macropeptide mélangé à des solides de lait écrémé pour préparer des formules infantiles de compositon en acides aminés semblable à celle du lait humain, en particulier contenant 4,3-4,8 g de thréonine/100 g de protéines.

Le lactosérum acide présente cependant certains inconvénients:
- il ne constitue pas une matière première disponible en en abondance et
- il est riche en minéraux particulièrement difficiles à éliminer, particulièrement le calcium et le phosphore, dans la mesure où la déminéralisation nécessite l'emploi de techniques d'échange d'ions lourdes à mettre en oeuvre et grandes consommatrices de produits chimiques tels que les acides et les bases et d'eau.

US-A-5 503 865 a pour objectif de préparer un lait concentré stabilisé ne comprenant pas les sels de stabilisation utilisés normalement dans la préparation du lait évaporé en mettant en oeuvre la microfiltration et dans lequel les qualités organoleptiques du lait sont préservées. Il n'est pas indiqué que le perméat de microfiltration, qui est un produit secondaire du procédé, est déminéralisé par électrodialyse seulement et que le produit ainsi traité est ensuite incorporé en tant que matière première protéique convenable à d'autres composants pour conduire à une formule infantile tout à fait adaptée au remplacement du lait maternel, par ce qu'elle a une composition idéale très proche de celle du lait humain en terme d'aminogramme avec une teneur basse en thréonine et une teneur élevée en tryptophane.

US-A-4 497 836 décrit un procédé de préparation d'une formule infantile comparable au lait humain dans laquelle du lactosérum est traité par ultrafiltration de manière à produire un rétentat enrichi en protéines et un perméat enrichi en lactose. Le perméat est déminéralisé et le rétentat enrichi en protéines est mélangé au perméat démonéralisé pour obtenir un produit de la composition souhaitée. Dans ce document, on met en oeuvre l'ultrafiltration et non la microfiltration, du lactosérum de fromagerie (plus précisément provenant de la fabrication de Mozzarella) et non du lait écrémé comme dans US-A-5 503 865. Il n'y a aucune mention d'autres sources de lactosérum. L'ultrafiltration est une filtration, pas une microfiltration. L'ultrafiltration conduit à un perméat exempt de protéines.

L'objet de la présente invention est de mettre à disposition un procédé de fabrication d'une formule infantile à prédominance à partir d'une matière première lactique issue de lactosérum, dont la composition en acides aminés est semblable à celle du lait humain, simple à mettre en oeuvre à partir d'une matière première abondante et ne présentant pas les inconvénients des sources de protéines de lactosérum connues.

Le procédé selon l'invention est caractérisé par le fait que l'on soumet un lait animal à une micro filtration sur membrane de porosité 0,1 à 0,2 micron et que l'on déminéralise le perméat par électrodialyse sans recourir à une décationation par échange d'ions.

L'invention concerne un procédé de préparation d'une formule infantile à prédominance à base d'une matière première lactique issue de lactosérum, dont la composition en acides aminés est semblable à celle du lait humain, caractérisé par le fait que l'on prépare une composition protéique en soumettant un lait animal n'ayant pas subi de traitement thermique ou ayant subi un traitement thermique modéré de pasteurisation, à une microfiltration sur membrane de porosité 0,1 à 0,2 micron de manière à obtenir un perméat, en concentrant le perméat de microfiltration et en déminéralisant le perméat concentré par électrodialyse sans recourir à une décationisation par échange d'ions, que l'on y ajoute de la caséine sous forme de rétentat de microfiltration, de caséine acide ou de caséinate, des matières grasses et, le cas échéant des minéraux et des oligoéléments.

Dans le contexte de l'invention, on utilise de préférence un lait de mammifère d'origine bovine, ovine ou caprine. Le lait peut être entier ou plus ou moins écrémé,cru, bactofugé ou bactofiltré ou pasteurisé dans des conditions douces ou encore reconstitué à partir de poudre de lait séché à basse température.

Le rôle de la microfiltration avec une membrane de porosité contrôlée est de retenir quantitativement la micelle de caséine tout en ne retenant pas les protéines de lactosérum natives. Ainsi, Il est important pour la bonne marche du procédé que le lait mis en oeuvre n'ait pas subi de traitement thermique ou ait subi un traitement thermique modéré de pasteurisation.

Le perméat obtenu a un profil en acides aminés caractérisé principalement par une teneur basse en thréonine, de l'ordre de 5-5,5 g/100 g de protéines et une teneur en tryptophane > ou = 2 g/100 g de protéines.

Il constitue une source idéale de protéines de lactosérum comparé au lactosérum doux de fromagerie:
- Sa composition et sa qualité sont constantes et ne dépendent pas des conditions de fabrication des fromages,
- Il est pratiquement exempt de bactéries,
- Il est enrichi en alpha-lactalbumine,
- Il ne contient pas de caséino-macropeptide,
- Il est entièrement délipidé,
- Il a une teneur en phosphore plus basse que le lactosérum acide et comparable au lactosérum doux et
- Il a une teneur en calcium plus basse que le lactosérum doux et que le lactosérum acide.

Ces avantages sont décisifs du point de vue de la déminéralisation, dans la mesure où la matière grasse a un effet néfaste sur la performance de l'électrodialyse et où il est difficile de réduire la teneur en calcium et particulièrement en phosphore.

Les exemples ci-après illustrent l'invention. Dans ceux-ci, les parties et pourcentages sont en poids, sauf indication contraire.

### Exemple 1

On pasteurise du lait écrémé à 72° C pendant 15 s. On chauffe 250 kg du lait écrémé pasteurisé à 50° C dans un échangeur à plaques, puis on le traite sur une installation de microfiltration tangentielle Tech-Sep (R) 1S 151 (St. Maurice de Beynost) équipée d'une membrane Tech-Sep (R) M 14 de dimensions de pores moyenne 0,14 micron et de surface totale de membrane 3,4 m² . On concentre ainsi le lait sur la membrane à 50° C d'un facteur de 6,8 x en volume, ce qui conduit à la production de 200 kg de perméat de degré Brix 6,2 et contenant 9,2 % de protéines/matières sèches et à 37 kg de rétcntat de degré Brix 28,2 soit 22 % de matières sèches et contenant 72,5 % de protéines/matières sèches que l'on sèche par pulvérisation.

On recueille le perméat et on le concentre par évaporation à une teneur en matières sèches de 25 %. On déminéralise le perméat concentré sur une installation d'électrodialyse Ionics (R) par 5 passages successifs. Après ces 5 passages, la conductivité chute de la valeur de départ 0,39 S/m (3,9 mS/cm) à 0,02 S/m (0,2 mS/cm) et la teneur en cendres est réduite de 7,4 %/matières sèches à 0,3 %/matières sèches. La concentration résiduelle en minéraux est indiquée au tableau 3 ci-après (Perméat ED). Le degré de déminéralisation exprimé au niveau des cendres est 95 %. Celui pour le phosphore est 80 %. La teneur en matières sèches a baissé de 25 % (valeur de départ) à 18,4 %. La teneur en protéines/matières sèches a évolué de 9,2 % (valeur de départ) à 8,4 %.

Le profil d'acides aminés des protéines du perméat ainsi traité est indiqué dans le tableau 1 ci-après et sa composition approximative et sa composition minérale sont indiquées dans le tableau 2 ci-après. A titre de comparaison, les valeurs correspondantes pour le lactosérum acide de caséinerie (obtenu après acidification chimique ou à l'aide de bactéries lactiques), pour le lactosérum doux de fromagerie et le profil d'acides aminés pour le lait humain (selon "The composition of mature human milk", Departement of Health & Social Security no. 12, London 1977, Her Majesty's Stationery Office) y sont également indiquées.

On ajuste le pH du perméat après concentration par évaporation et électrodialyse à 6,5 et on ajoute à 100 kg de perméat (18,4 kg de matières sèches ou 1,55 kg de protéines sériques) 6,46 kg de rétentat de microfiltration (1,42 kg de matières sèches ou 1,03 kg de caséine) afin d'arriver à un mélange contenant 60 % de protéines totales sous forme de protéines sériques et 40 % de protéines totales sous forme de caséine.

A la température de 60° C, on ajoute à 74 parties de matières sèches du mélange perméat/rétentat (dont la teneur en protéines totales/matières sèches est 13 %) 26 parties de matière grasse (constituée d'un mélange de différentes graisses végétales) sous agitation vigoureuse, pour obtenir dans la composition une teneur en protéines totales/matières sèches de 9,6 %.

On standardise alors la composition liquide en oligoéléments, en éléments traces et en vitamines. On homogénéise ensuite le mélange à 60° C (en 2 étages 200 bar/50 bar), on le stérilise par UHT avec injection directe de vapeur (148° C/4 s), puis on le concentre par évaporation et on le sèche par pulvérisation.

### Exemple 2

On écrème du lait cru à l'aide d'un séparateur centrifuge continu à 45° C, puis on le chauffe à 50° C dans un échangeur à plaques et on le pompe à travers une unité de bactofugation Tetrapack (R) (modèle MFS-7, équipé de membranes Membralox (R) de 1,4 micron). On chauffe ensuite 300 kg de lait écrémé ainsi purifié dans une cuve à double paroi à 55° C et on le pompe à travers le module de microfiltration Tech-Sep (R) comme à l'exemple 1, mais cette fois-ci avec une réduction de volume d'un facteur de 3 x. A ce niveau, on diafiltre avec 3 volumes d'eau déminéralisée. Le perméat total a une teneur en matières sèches de 5,9 % et le rétentat a une teneur en matières sèches de 10,4 %. La teneur totale en protéines du perméat est 10,4 %/matières sèches et la teneur en protéines vraies 7 %, la différence représentant l'azote non protéique (NPN).

La composition approximative ainsi que la composition minérale du perméat de micro filtration sont indiquées dans le tableau 2 ci-après et son profil d'acides aminés est indiqué dans le tableau 1 ci-après.

On concentre ensuite le perméat de microfiltration à 30 % de matières sèches par évaporation, puis on procède ensuite à la déminéralisation par électrodialyse du perméat concentré précédent comme dans l'exemple 1. La teneur en minéraux résiduelle du perméat ainsi concentré et déminéralisé est indiquée au tableau 3 ci-après (Perméat ED).

On prépare enfin une formule infantile comprenant le concentrat précédent comme à l'exemple 1.

### Exemple 3

On disperse 50 kg d'une poudre de lait écrémé dans de l'eau déionisée et on ajuste le volume de la dispersion à 500 1, de sorte que sa teneur en matières sèches soit 10 %. On chauffe le lait écrémé reconstitué à 55° C au moyen d'un échangeur à plaques, on le désaère et on le réchauffe à 55° C au moyen d'un échangeur à plaques, puis on le fait passer à travers l'unité de microfiltration Tech-Sep (R) comme à l'exemple 1, jusqu'à un facteur de concentration volumique de 5 x. Le perméat total a une teneur en matières sèches de 5,8 %, une teneur en protéines totales de 9,5 %/matières sèches et une teneur en protéines vraies de 5,7 %. La composition approximative ainsi que la composition minérale du perméat de microfiltration sont indiqués dans le tableau 2 ci-après et son profil d'acides aminés est indiqué dans le tableau 1 ci-après.

On concentre le perméat de microfiltration à 25 % de matières sèches par évaporation et l'on déminéralise le perméat concentré par électrodialyse jusqu'à ce que la conductivité soit = ou < 0,02 S/m (0,2 mS/cm). Le perméat déminéralisé a un pH de 4,4.

On abaisse ensuite le pH à 3,6 à l'aide d'une solution aqueuse d'HCI. puis on diafiltre le perméat déminéralisé avec un volume d'eau déminéralisée et enfin on le concentre par ultrafiltration sur membranes DDS (R) GR 61 PP (de coupure nominale 20.000 dalton). Le rétentat d'ultrafiltration a une teneur en protéines totales de 23 %/matières sèches et sa teneur en minéraux résiduelle est indiquée dans le tableau 3 ci-après (Perméat ED avec UF).

On prépare enfin une formule infantile dont le rapport pondéral des séroprotéines (provenant du perméat de microfiltration) et des caséines (provenant du rétentat de microfiltration) est environ 60/40 de manière analogue à l'exemple 1.

**Tableau 1**

| **Résidu d'acide aminé (%)** | **Exemple 1** | **Exemple 2** | **Exemple 3** | **Lactosérum acide** | **Lactosérum doux** | **Lait humain** |
|---|---|---|---|---|---|---|
| Acide aspartique | 11,2 | 10,9 | 11 | 10,8 | 10,4 | 8,9 |
| **Thréoni ne** | **5** | **5,2** | **5,2** | **5,4** | **7,1** | **4,6** |
| Sérine | 4,4 | 4,8 | 4,8 | 4,4 | 4,9 | 4,3 |
| Acide glutamique | 17,2 | 17,4 | 17,3 | 16,2 | 17,6 | 17,9 |
| Proline | 4,6 | 5 | 5 | 4,9 | 5,9 | 9,6 |
| Glycine | 1,9 | 2 | 2 | 2,1 | 1,8 | 2,5 |
| Alanine | 4,6 | 4,5 | 4,6 | 4,9 | 4,7 | 4,1 |
| Cystine | 2,8 | 2,6 | 2,5 | 3 | 2,6 | 2 |
| Valine | 4,6 | 4,7 | 4,8 | 5,1 | 5,4 | 6,9 |
| Méthionine | 2,3 | 2,4 | 2,2 | 2,4 | 2,6 | 1,5 |
| Isoleucine | 5,2 | 5 | 5 | 5 | 5,7 | 5,3 |
| Leucine | 12,1 | 11,8 | 11,8 | 11,8 | 10,3 | 9,7 |
| Tyrosine | 3,6 | 3,7 | 3,6 | 3,7 | 2,9 | 3 |
| Phénylalanine | 3,7 | 3,8 | 3,8 | 3,7 | 3,2 | 3,8 |
| Lysine | 9,9 | 9,4 | 9,6 | 9,6 | 8,8 | 7,2 |
| Histidine | 1,9 | 1,9 | 2 | 1,9 | 1,7 | 2,4 |
| Arginine | 2,5 | 2,6 | 2,6 | 3 | 2,6 | 3,8 |
| **Tryptophane** | **2,3** | **2,2** | **2,1** | **2,2** | **1,8** | **2,3** |

Dans les tableaux 2 et 3 ci-après, les valeurs analytiques ont été obtenues par les méthodes suivantes:
- contenu en protéines brutes: calculé à partir des mesures par la méthode de Kjeldahl de l'azote total (TN) x 6,38,
- contenu en protéines vraies: calculé à partir des mesures par la méthode de Kjeldahl de l'azote total (TN) et de l'azote non protéique (NPN), soit comme (TN-NPN) x 6,38,
- cendres: déterminées par calcination à 550° C,
- teneurs en cations (Ca⁺⁺, Mg⁺⁺, Na⁺, K⁺): mesurées par spectroscopie d'absorption atomique (ASS), teneur en phosphore: mesurée par colorimétrie, teneur en Cl⁻ : mesurée par potentiométrie avec électrode d'argent.

**Tableau 2**

| **Composant** | **Perméat Exemple 1** | **Perméat Exemple 2** | **Perméat Exemple 3** | **Lactosérum acide** | **Lactosérum doux** |
|---|---|---|---|---|---|
| g/100g MS: | | | | | |
| Protéine | 9,2 | 10,4 | 9,5 | 10,8 | 12 |
| Lactose | 81 | 79 | 81,5 | 71 | 78,8 |
| Graisse | 0 | 0 | 0 | 1,4 | 1 |
| Cendres | 7,4 | 7,7 | 6,9 | 12,3 | 8,2 |
| Protéine vraie | 6,2 | 7 | 5,7 | 6,5 | 9 |

| mg/100 g MS | | | | | |
|---|---|---|---|---|---|
| Calcium | 312 | 441 | 472 | 1800-2000 | 500 |
| Magnésium | 80 | 112 | 116 | 161 | 160 |
| Sodium | 632 | 611 | 624 | 1063 | 780 |
| Potassium | 2660 | 2248 | 2430 | 1844 | 2500 |
| Phosphore | 544 | 562 | 582 | 1100 | 850 |

Dans le tableau 3 ci-après, les valeurs relatives à un concentrat de lactosérum doux déminéralisé par électrodialyse, puis échange d'ions par passage sur une résine cationique forte, puis sur une résine anionique faible sont indiquées à titre de comparaison (Lactosérum doux déminéralisé).

**Tableau 3**

| **Composant** | **Perméat ED Exemple 1** | **Perméat ED Exemple 2** | **Perméat ED avec UF Exemple 3** | **Lactosérum doux déminéralisé** |
|---|---|---|---|---|
| G/100g MS: | | | | |
| Protéine (Nx6,38) | 8,4 | 8,9 | 23,2 | 12,5 |
| Lactose | 85 | 85 | 70 | 86,2 |
| Graisse | <1 | <1 | 1 | 0,8 |
| Cendres | 0,2 | 0,7 | 0,9 | 0,5 |

| mg/100g MS | | | | |
|---|---|---|---|---|
| Calcium | <10 | 52 | 44 | 30 |
| Magnésium | <10 | 26 | 31 | 10 |
| Potassium | <10 | 26 | <10 | 10 |
| Sodium | <10 | 16 | <10 | 20 |
| Phosphore | 112 | 145 | 175 | 100 |
| Chlorure | 30 | <10 | <10 | 9 |

## Revendications

1. Procédé de préparation d'une formule infantile à prédominance à base d'une matière première lactique issue de lactosérum, dont la composition en acides aminés est semblable à celle du lait humain, **caractérisé par le fait que** l'on prépare une composition protéique en soumettant un lait animal n'ayant pas subi de traitement thermique ou ayant subi un traitement thermique modéré de pasteurisation, à une microfiltration sur membrane de porosité 0,1 à 0,2 micron de manière à obtenir un perméat, en concentrant le perméat de microfiltration et en déminéralisant le perméat concentré par électrodialyse sans recourir à une décationisation par échange d'ions, que l'on y ajoute de la caséine sous forme de rétentat de microfiltration, de caséine acide ou de caséinate, des matières grasses et, le cas échéant des minéraux et des oligoéléments.

2. Procédé selon la revendication 1, **caractérisé par le fait que** l'on microfiltre le lait jusqu'à un facteur de concentration de 3 à 7 en volume sans ou avec diafiltration.

3. Procédé selon la revendication 1, **caractérisé par le fait que** l'on concentre le perméat de microfiltration par ultrafiltration pour en diminuer son contenu en lactose.

4. Procédé selon la revendication 1, **caractérisé par le fait que** l'on concentre le mélange des différents constituants, notamment par évaporation et qu'on le sèche par pulvérisation.

5. Procédé selon la revendication 1, **caractérisé par le fait que** les proportions de protéines de lactosérum/caséine sont 60-70 %/40-30 % en poids.

6. Procédé selon la revendication 1, **caractérisé par le fait que** la formule infantile contient 5,5 % de thréonine et au moins 2% de tryptophane par rapport au poids de protéines.

## Claims

1. Process for the preparation of an infant formula based predominantly on a lactic raw material from whey, the amino acid composition of which formula is similar to that of human milk, **characterised in that** a protein composition is prepared by subjecting an animal milk that has not undergone heat treatment or that has undergone moderate pasteurising heat treatment to microfiltration through a membrane having a porosity of from 0.1 to 0.2 micron in order to obtain a permeate, concentrating the microfiltration permeate and demineralising the concentrated permeate by electrodialysis without recourse to ion-exchange decationisation, and **in that** there are added thereto casein in the form of the microfiltration retentate, of acid caseine or of caseinate, fats and, where appropriate, minerals and oligoelements.

2. Process according to claim 1, **characterised in that** the milk is subjected to microfiltration to a concentration factor of from 3 to 7 by volume without or with diafiltration.

3. Process according to claim 1, **characterised in that** the microfiltration permeate is concentrated by ultrafiltration in order to reduce its lactose content.

4. Process according to claim 1, **characterised in that** the mixture of the various constituents is concentrated, especially by evaporation, and is spray-dried.

5. Process according to claim 1, **characterised in that** the ratio of whey proteins/casein is 60-70 wt.%/40-30 wt.%.

6. Process according to claim 1, **characterised in that** the infant formula contains 5.5 % threonine and at least 2 % tryptophan, based on the weight of proteins.

## Patentansprüche

1. Verfahren zur Herstellung einer Kindernahrungsmittelzusammensetzung überwiegend auf der Grundlage eines von Molke stammenden Milchausgangsmaterials, deren Aminosäurenzusammensetzung der der menschlichen Milch ähnlich ist, **dadurch gekennzeichnet, daß** man eine Proteinzusammensetzung herstellt, indem man eine tierische Milch, die keiner thermischen Behandlung oder einer moderaten thermischen Pasteurisierungsbehandlung unterzogen worden war, einer Mikrofiltration über eine Membran mit der Porosität von 0,1 bis 0,2 Mikron so aussetzt, daß man ein Permeat erhält, indem man das Mikrofiltrationspermeat konzentriert und indem man das konzentrierte Permeat durch Elektrodialyse ohne Zuhilfenahme einer Cationenenfernung durch Ionenaustausch entmineralisiert, daß man Casein in Form von Mikrofiltrationsretentat, von saurem Casein oder von Caseinat, Fette und ggf. Mineralstoffe und Oligoelemente zusetzt.

2. Verfahren nach Anspruch 1, **dadurch gekennzeichnet, daß** man die Milch bis zu einem Konzentrationsfaktor von 3 bis 7, bezogen auf das Volumen, ohne oder mit Diafiltration mikrofiltriert.

3. Verfahren nach Anspruch 1, **dadurch gekennzeichnet, daß** man das Mikrofiltrationspermeat zur Verringerung seines Lactosegehalts durch Ultrafiltration konzentriert.

4. Verfahren nach Anspruch 1, **dadurch gekennzeichnet, daß** man die Mischung der verschiedenen Bestandteile insbesondere durch Eindampfen konzentriert und daß man sie durch Sprühtrocknung trocknet.

5. Verfahren nach Anspruch 1, **dadurch gekennzeichnet, daß** die Verhältnisse von Molkeprotein/Casein 60-70 Gew.-%/40-30 Gew.-% betragen.

6. Verfahren nach Anspruch 1, **dadurch gekennzeichnet, daß** die Kindernahrungsmittelzusammensetzung 5,5% Threonin und mindestens 2% Tryptophan, bezogen auf das Gewicht der Proteine, enthält.
